# EUROPÄISCHE PATENTSCHRIFT

(11) **EP 2 089 248 B1**
(45) Veröffentlichungstag und Bekanntmachung des Hinweises auf die Patenterteilung: **13.01.2016**
(21) Anmeldenummer: 07819485.9
(22) Anmeldetag: 30.10.2007
(51) Int. Cl.: B60N 2/22, B60N 2/44

(54) **FAHRZEUGSITZ**
VEHICLE SEAT
SIÈGE DE VÉHICULE

(30) Priorität: 09.11.2006 DE 102006053201; 14.06.2007 DE 102007028052
(43) Veröffentlichungstag der Anmeldung: 19.08.2009
(60) Teilanmeldung: 14156357.7
(73) Patentinhaber: Johnson Controls GmbH, 51399 Burscheid (DE)
(72) Erfinder: MATHEWS, Ian, 50670 Köln (DE); COOKE, David, Runcorn, Cheshire WA 7 5NE (GB); VAN-SOOLINGEN, Marc, 5932 AW Tegelen (NL); NDAGIJIMANA, Robin, 41469 Neuss (DE); PELLENZ, Wolfgang, 53340 Meckenheim (DE)
(74) Vertreter: Schwöbel, Thilo K.
(86) Internationale Anmeldenummer: PCT/EP2007/009452
(87) Internationale Veröffentlichungsnummer: WO 2008/055610

(56) Entgegenhaltungen:
- DE-A1- 3 707 926
- DE-A1- 10 144 078

## Beschreibung

Die Erfindung betrifft einen Fahrzeugsitz, insbesondere nach dem Oberbegriff des Anspruchs 1. Ein solcher Fahrzeugsitz ist aus der DE 101 44 078 A1 bekannt.

Weitere Fahrzeugsitze sind aus der internationalen Patentanmeldung PCT/EP06/001191 bekannt.

Die dort offenbarten Kraftfahrzeugsitze zeichnen sich durch eine geringe Bautiefe aus. Strukturen für Fahrzeugsitze sind beispielsweise aus der DE 43 03 006 A1 sowie der DE 697 24 103 T2 bekannt.

Der Erfindung liegt die Aufgabe zugrunde, einen Fahrzeugsitz mit einer Rückenlehne mit einer besonders geringen Bautiefe bereitzustellen, ohne dass der Komfort gegenüber herkömmlichen Fahrzeugsitzen verschlechtert wird und/oder den Sitzkomfort eines Fahrzeugsitzes mit einer geringen Bautiefe zu erhöhen. Gelöst wird die Aufgabe durch den Gegenstand des Anspruchs 1.

Die erfindungsgemäßen Kraftfahrzeugsitze zeichnen sich durch einen hohen Komfort bei einer geringen Bautiefe aus. Durch die geringe Bautiefe werden die Kniefreiheit für Insassen in dahinter angeordneten Fahrzeugsitzen und die Ausnutzung des Fahrzeuginnenraums im Allgemeinen verbessert. Darüber hinaus sind die erfindungsgemäßen Kraftfahrzeugsitze vergleichsweise leicht. Die Sitzschalenstruktur kann an die Wünsche des jeweiligen Kraftfahrzeugherstellers vergleichsweise einfach angepasst werden, wodurch eine Individualisierung der jeweiligen Kraftfahrzeugsitze möglich ist.

Der erfindungsgemäße Kraftfahrzeugsitz weist ein Sitzteil und eine Rückenlehne auf. Während das Sitzteil in herkömmlicher Weise gefertigt sein kann, weist die Rückenlehne eine Schalenstruktur auf, die aus jedem beliebigen, geeigneten Material gefertigt sein kann. Vorzugsweise besteht die Schalenstruktur zumindest teilweise aus Kunststoff. Bezüglich des Sitzteils und der Schalenstruktur wird des weiteren auf die PCT/EP06/001191 verwiesen.

Diese Sitzstruktur kann einen Zentralteil, der im Bereich um die Wirbelsäule der Insassen angeordnet ist und Seitenflügel, die im seitlichen Randbereich des Rückens angeordnet sind, aufweisen. Der Kraftfahrzeugsitz kann an einer beliebigen Stelle innerhalb des Kraftfahrzeuginnenraums angeordnet sein.

Erfindungsgemäß weist die Schalenstruktur mindestens eine Vertiefung zur Aufnahme von verdickten Polsterungen auf. Durch diese Polsterungen wird der Sitzkomfort des erfindungsgemäßen Kraftfahrzeugsitzes erhöht. Dadurch, dass die Polsterungen in Vertiefungen angeordnet sind, wird die Bautiefe der Rückenlehne wenn überhaupt dann nur unwesentlich vergrößert. Durch die Vertiefungen wird des weiteren die Steifigkeit der Schalenstruktur erhöht. Vorzugsweise sind die Vertiefungen und demnach die verdickten Polsterungen im oberen Bereich des Zentralteils der Schalenstruktur angeordnet. Weiterhin bevorzugt sind die Vertiefungen und demnach die verdickten Polsterungen im Bereich der Seitenflügel angeordnet, um wiederum den Sitzkomfort und die seitliche Abstützung der Insassen zu verbessern.

Weiterhin weist die Schalenstruktur des Kraftfahrzeugsitzes einen Zentralteil und Seitenflügel auf, die elastisch federnd an der Schalenstruktur angeordnet sind. Dadurch wird zusätzlich der Sitzkomfort der Insassen des Sitzes erhöht. Federnd elastisch im Sinne der Erfindung bedeutet, dass sich die Seitenflügel beim Einsitzen in den Kraftfahrzeugsitz der Rückenkontur ausweichen dabei aber einen fühlbaren Widerstand bieten. Beim Verlassen des Kraftfahrzeugssitzes formen sich die Seitenflügel wieder zurück. Die Seitenflügel federn bei sich ändernden Lastzuständen, beispielsweise während der Fahrt.

Erfindungsgemäß ist zwischen dem Zentralteil und dem Seitenflügel ein Schlitz angeordnet. Besonders bevorzugt weist der Schlitz einen oberen Bereich auf, in dem sich Mittel zur Reduzierung der Kerbwirkung befinden, um zu vermeiden, dass die Schalenstruktur in diesem Bereich unter Belastung einreißt. Derartige Mittel sind beispielsweise vorzugsweise bogenförmige Rundungen oder sonstige Formen, die keine Spitzen aufweisen.

Erfindungsgemäß weist das Zentralteil Versteifungsmittel, beispielsweise Versteifungsrippen auf, die besonders bevorzugt parallel der Längsachse der Schalenstruktur angeordnet sind.

Erfindungsgemäß weist der Fahrzeugsitz zusätzlich eine Lehnenstruktur, beispielsweise aus Metall auf, um dem Fahrzeugsitz die nötige Steifheit zu verleihen. Besonders bevorzugt ist das Zentralteil der Schalenstruktur in ihrem oberen Bereich mit semiflexiblen Lagern an einer Lehnenstruktur verbunden. Diese Lager verbinden die Schalenstruktur fest mit der Lehnenstruktur weisen aber, beispielsweise durch die Wahl des Werkstoffs, beispielweise eines halbstarren Kunststoffs eine gewisse Elastizität auf. Dadurch kann sich die Schalenstruktur relativ zur Lehenstruktur bewegen, so dass sich die Schalenstruktur in gewissen Grenzen an die Form des Rückens des Fahrzeuginsassen anpassen kann, was sich positiv auf den Sitzkomfort auswirkt.

Erfindungsgemäß weist das Zentralteil der Schalenstruktur an seinem unteren Bereich eine Lageranordnung auf, die beim Einsitzen eine Relativbewegung zwischen dem Zentralteil und der Lehenstruktur zulässt. Dadurch kann sich auch der untere Teil des Zentralteils der Schalenstruktur an den Rücken des Sitzinsassen anpassen.

Vorzugsweise umfasst die Lageranordnung eine Drehhebelanordnung, wobei vorzugsweise ein Drehhebel an dem Zentralteil der Schalenstruktur und ein Hebel drehbar mit der Lehnenstruktur des Fahrzeugsitzes verbunden ist. Die beiden Hebel sind über eine Drehachse miteinander verbunden.

Eine weitere bevorzugte Ausführungsform besteht aus einem Drehhebel, der an seinem einen Ende drehbar mit der Lehnenstruktur verbunden ist und an seinem anderen Ende mit einer Linearführung zusammenwirkt, die an dem Zentralteil angeordnet ist.

Besonders bevorzugt ist die Lageranordnung, vorzugsweise mit einem Federmittel, vorgespannt, so dass z.B. die Vorwölbung des Zentralteils im Bereich der Lordose durch Veränderung beispielsweise der Federspannung gezielt eingestellt werden kann. Besonders bevorzugt erfolgt die Verstellung der Vorspannung des Federmittels mit einer Spannvorrichtung.

Im folgenden wird die Erfindung anhand der Figuren 1 - 6 erläutert.
- Figur 1: zeigt eine Ausführungsform des erfindungsgemäßen Kraftfahrzeugsitzes.
- Figur 2: zeigt die Schalenstruktur in zwei Ansichten.
- Figur 3: zeigt die Schalenstruktur gemäß Figur 2 mit Polstern.
- Figur 4: zeigt die untere Lageranordnung mit Federmittel.
- Figur 5: zeigt eine weitere Ausführungsform der Lageranordnung mit Federmittel.
- Figur 6: zeigt eine Veränderung der Federspannung

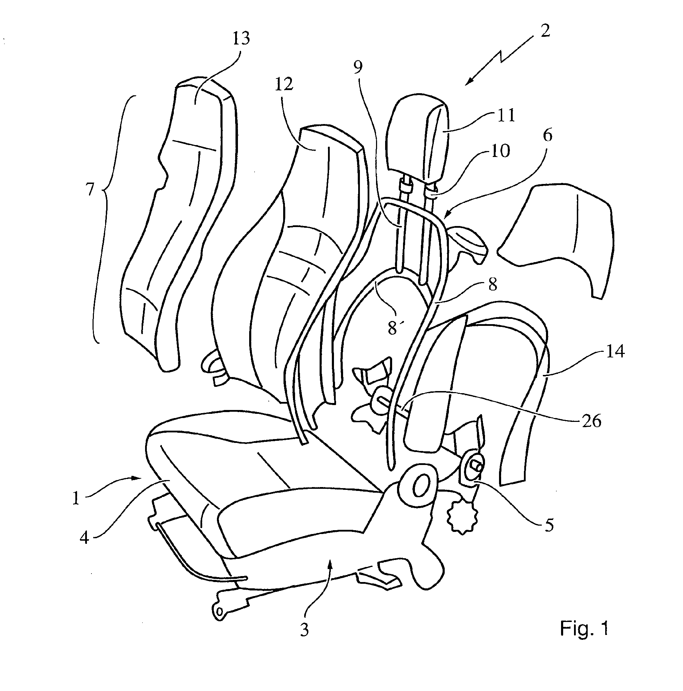

Die Figuren stellen beispielhaft und schematisch verschiedene Ausführungen der Erfindung dar. Die in Figur 1 gezeigte Rückenlehne entspricht in ihrem prinzipiellen Aufbau der in PCT/EP 06/001191 offenbarten Ausbildung.

Das Sitzteil 1 des Fahrzeugsitzes 2 besteht in herkömmlicher Weise aus einer aus Stahlblech geschweißten Metallstruktur 3 und einem darauf unmittelbar aufgesetzten, relativ massiven Kissen 4 aus geschäumtem Polyurethan. Die am hinteren Bereich der Metallstruktur 3 angeordneten Lehnenneigungsversteller 5 nehmen die auskragenden Enden eines U-förmigen Rahmenteils 6 der Rückenlehne 7 winkelverstellbar auf. Das Rahmenteil 6 ist aus zwei zueinander beabstandet angeordneten, bogenförmigen Rohrstücken 8, 8' aufgebaut, deren nach unten ragenden Enden mit den Lehnenneigungsverstellern 5 verbunden sind. Im oberen Bereich sind die Rohrstücke 8, 8' durch zwei vertikale, rohrförmige Holme 9 miteinander verbunden, welche die Haltestangen 10 einer herkömmlichen Kopfstütze 11 aufnehmen. Das Rahmenteil 6 ist insassenseitig mit einer aus Kunststoff bestehenden, körperkonturgerecht geformten und elastisch verformbaren Schalenstruktur 12 und einem dünnwandigen Polsterteil 13 versehen. Rückseitig verkleiden Abdeckblenden 14 das Rahmenteil 6. Die Form der Schalenstruktur 12 kann von dem jeweiligen Fahrzeughersteller festgelegt werden, wodurch eine Individualisierungsmöglichkeit gegenüber anderen Fahrzeugherstellern möglich ist.

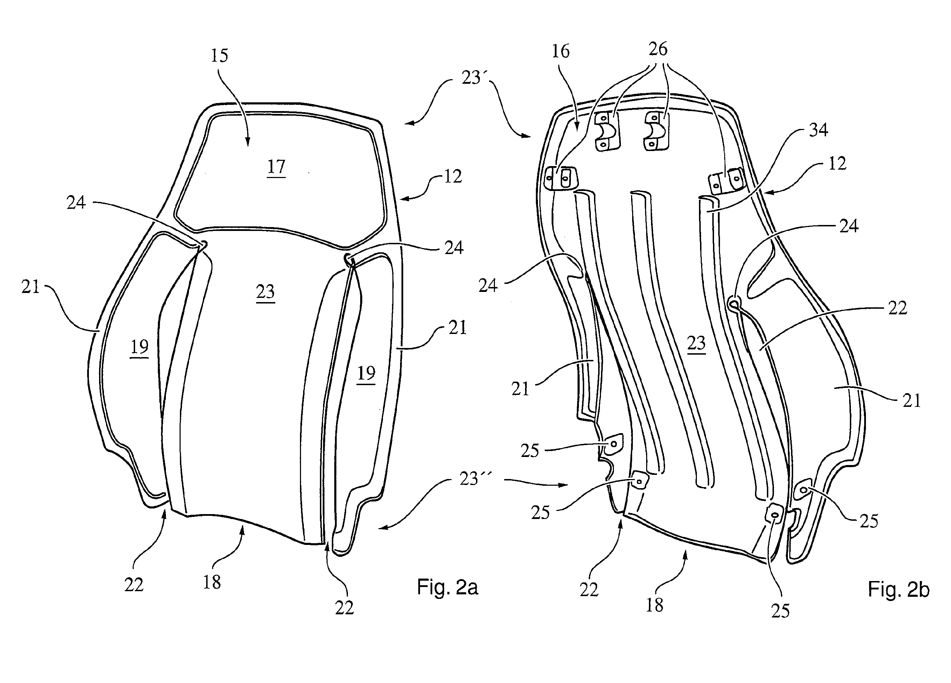

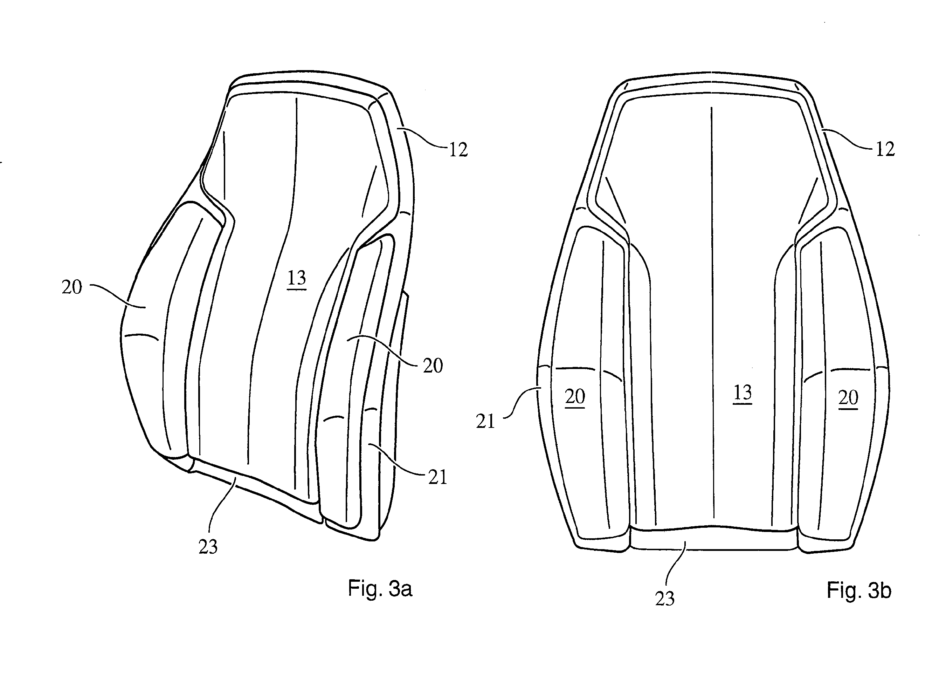

Die Figuren 2a und 2b zeigen die dem Insassen zugewandte Vorderseite 15 bzw. die Rückseite 16 der Schalenstruktur 12. Diese weist vorderseitig eine obere Vertiefung 17 zur Aufnahme des dort verdickten, sich bis zur Unterkante 18 der Schalenstruktur 12 erstreckenden Polsterteils 13 (siehe Fig. 3a, b) sowie laterale Vertiefungen 19 zur Aufnahme gesonderter Seitenpolster 20 auf. Die zugeordneten Seitenflügel 21 der Schalenstruktur 12 sind bereichsweise über etwa vertikal verlaufende, sich von der Unterkante aus bis in das obere Dritte der Schalenstruktur 12 erstreckende Schlitze 22 vom Zentralteil 23 der Schalenstruktur 12 getrennt und gegenüber dem Zentralteil 23 elastisch federnd. Zur Reduzierung der Kerbwirkung sind die Schlitze 22 an ihrem oberen Ende mit einer bogenförmigen Erweiterung 24 versehen. Auf der Rückseite des Zentralteils sind Verstärkungsrippen 34 angeordnet.

Die Seitenflügel 21 und das Zentralteil 23 sind rückseitig im Bereich der Unterkante 18 mit Befestigungspunkten 25, 25' zur Anbringung am Rahmenteil 6 sowie einem zwischen den Lehnensneigungsverstellern 5 verlaufenden Querrohr 26 (siehe Fig. 1) ausgestattet. Am oberen Ende 23' des Zentralteils der Schalenstruktur 12 sind rückseitig ferner halbflexible, schalenartige Lager 26 zum drehbeweglichen Umgreifen des Rohrstücks 8 der Rahmenstruktur 6 vorgesehen.

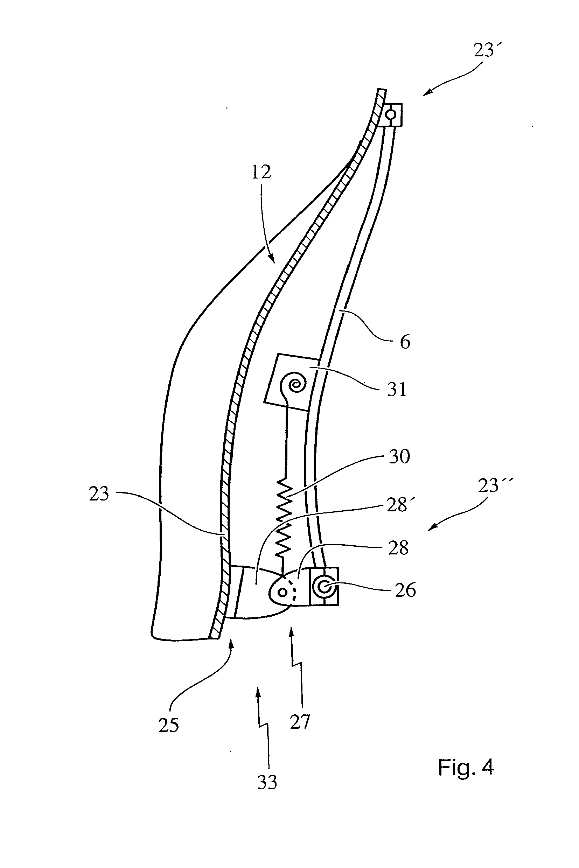

Die Verbindung zwischen den dem Zentralteil 23 zugeordneten Befestigungspunkten 25 und dem Rahmenteil 6 kann mit Vorteil, wie aus Fig. 4 ersichtlich, über eine Drehhebelanordnung 27 erfolgen, welche einen am Querrohr 26 schwenkbar gelagerten ersten Drehhebel 28 und einen zweiten, über den Befestigungspunkt 25 starr an der Schalenstruktur 12 fixierten zweiten Drehhebel 28' umfasst. Die Drehhebel 28, 28' sind miteinander um eine quer zur Sitzrichtung verlaufende Drehachse 29 schwenkbar verbunden und gleichen die vertikale Ausdehnung der Schalenstruktur 12 beim Einfedem des Zentralteils 23 aus. Durch auf die Drehhebelanordnung 27 wirkende, sich beispielsweise von der Drehachse 29 nach oben erstreckende Federmittel 30 lässt sich die Vorwölbung des Zentralteils 23 im Bereich der Lordose beeinflussen und durch eine Vorrichtung 31 zur Veränderung der Federspannung sogar gezielt einstellen. Des weiteren können Eigenschaftsänderungen der Rückenlehne durch Temperaturveränderungen bei Belegung des Sitzes ausgeglichen werden.

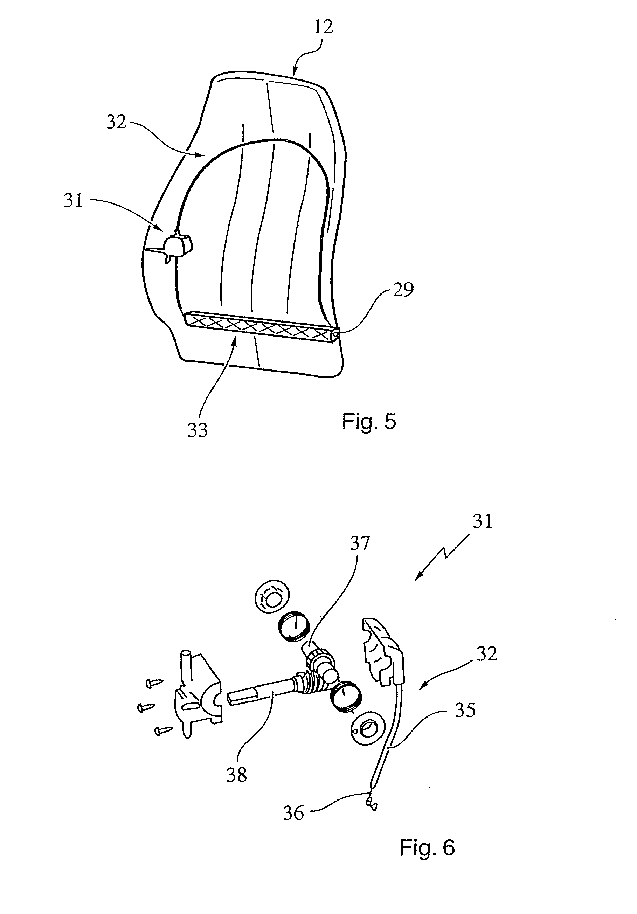

Fig. 5 zeigt eine weitere Ausführungsform der unteren Lageranordnung 33. Während der Einsitzens rotiert die Lagerung 33 um eine Drehachse 29 und erzeugt eine Auslenkung des Bowdenzuges 32, dessen Seele 36 mit der Lagerung 33 beidseitig verbunden ist. Der Grad der Drehung hängt von der Vorspannung des Bowdenzuges sowie von der Höhe der Belastung ab.

Die Vorspannung des Bowdenzuges, der bei dem vorliegenden Beispiel das Federmittel darstellt erfolgt mit dem Mittel 31, das in Figur 6 dargestellt ist. Die Seele 35 des Bowdenzuges wird an zwei Stellen in die Vorrichtung 31 eingeführt und mit der Rolle 37 verbunden. Die Hülle 35 des Bowdenzuges 32 stützt sich an zwei Stellen an dem Mittel 31 ab. Durch Drehung der Rolle wird der Bowdenzug ge- bzw. entspannt. Die Rolle 37 wird durch die Antriebswelle 38 angetrieben, die manuell oder motorisch betrieben werden kann.

### Bezugzeichenliste:

- 1: Sitzteil
- 2: Fahrzeugsitz
- 3: Metallstruktur
- 4: Kissen
- 5: Lehnenneigungsversteller
- 6: Rahmenteil
- 7: Rückenlehne
- 8,8': Rohrstück
- 9: Holm
- 10: Haltestange
- 11: Kopfstütze
- 12: Schalenstruktur
- 13: Polsterteil
- 14: Abdeckblenden
- 15: Vorderseite
- 16: Rückseite
- 17: Vertiefung
- 18: Unterkante
- 19: Vertiefung
- 20: Seitenpolster
- 21: Seitenflügel
- 22: Schlitz
- 23: Zentralteil
- 23': oberer Teil der Zentraleinheit
- 23": unterer Teil der Zentraleinheit
- 24: Erweiterung, Spannungsspitzenabbau
- 25, 25': Befestigungspunkt
- 26: Querrohr
- 27: Drehhebelanordnung
- 28, 28': Drehhebel
- 29: Drehachse
- 30: Federmittel
- 31: Vorrichtung zur Veränderung der Federspannung
- 32: Bowdenkabel
- 33: Untere Lageranordnung
- 34: Versteifungsmittel, Versteifungsrippen
- 35: Hülle des Bowdenzugs
- 36: Seele des Bowdenzugs
- 37: Rolle für die Seele des Bowdenzugs
- 38: Antriebswelle

## Patentansprüche

1. Fahrzeugsitz mit einem Sitzteil (1) und einer Rückenlehne (7) mit einer Rückenlehnenstruktur, insbesondere Kraftfahrzeugsitz, wobei die Rückenlehne eine Schalenstruktur (12) aufweist, welche insassenseitig mit einer Polsterung (13) versehen ist, wobei die Schalenstruktur (12) mindestens eine Vertiefung (17, 19) zur Aufnahme einer Verdickung der Polsterung (13) aufweist, wobei die Schalenstruktur (12) einen Zentralteil (23) und Seitenflügel (21) aufweist, die elastisch federnd an dem Zentralteil (23) angeordnet sind, **dadurch gekennzeichnet, dass** zwischen dem Zentralteil (23) und dem Seitenflügel (21) jeweils ein Schlitz (22) angeordnet ist und der Zentralteil (23) Versteifungsmittel (34) aufweist, wobei der Zentralteil (23) der Schalenstruktur in seinem unteren Bereich (23") mit einer unteren Lageranordnung (33) beweglich an der Rückenlehnenstruktur gelagert ist.

2. Kraftfahrzeugsitz nach Anspruch 1, **dadurch gekennzeichnet, dass** die Schlitze einen oberen Bereich aufweisen, in dem sich Mittel (24) zur Reduzierung der Kerbwirkung befinden.

3. Kraftfahrzeugsitz nach einem der Ansprüche 1 oder 2, **dadurch gekennzeichnet, dass** der Zentralteil (23) der Schalenstruktur (12) in seinem oberen Bereich (23') mit semiflexiblen Lagern (26) an einer Rückenlehnenstruktur (8, 8') verbunden ist.

4. Kraftfahrzeugsitz nach einem der Ansprüche 1 - 3, **dadurch gekennzeichnet, dass** die Lageranordnung (33) eine Drehhebelanordnung (27) umfasst.

5. Kraftfahrzeugsitz nach einem der Ansprüche 1 - 4, **dadurch gekennzeichnet, dass** die Lageranordnung (33), vorzugsweise mit einem Federmittel (30, 32) vorgespannt ist.

6. Kraftfahrzeugsitz nach Anspruch 5, **dadurch gekennzeichnet, dass** die Vorspannung des Federmittels mit einer Spannvorrichtung (31) einstellbar ist.

## Claims

1. Vehicle seat with a seat component (1) and a backrest (7) having a backrest structure, in particular a motor vehicle seat, the backrest having a shell structure (12) which is provided on the occupant side with an upholstered element (13), wherein the shell structure (12) has at least one depression (17, 19) for accommodating a thickening of the upholstered element (13), wherein the shell structure (12) comprises a central part (23) and side wings (21), which are arranged in an elastically resilient manner on the central part (23), **characterized in that** between the central part (23) and the side wings (21) a slot (22) is arranged in each case and the central part (23) comprises reinforcing means (34), wherein the central part (23) of the shell structure in its lower region (23'') is movably mounted by a lower bearing arrangement (33) on the backrest structure.

2. Motor vehicle seat according to Claim 1, **characterized in that** the slots comprise an upper region, in which means (24) are located for reducing the stress concentration.

3. Motor vehicle seat according to either of Claims 1 and 2, **characterized in that** the central part (23) of the shell structure (12) in its upper region (23') is connected by semi-flexible bearings (26) to a backrest structure (8, 8').

4. Motor vehicle seat according to one of Claims 1-3, **characterized in that** the bearing arrangement (33) comprises a rotary lever arrangement (27).

5. Motor vehicle seat according to one of Claims 1-4, **characterized in that** the bearing arrangement (33) is preferably pre-tensioned by a spring means (30, 32).

6. Motor vehicle seat according to Claim 5, **characterized in that** the pre-tensioning of the spring means may be adjusted by a tensioning device (31).

## Revendications

1. Siège de véhicule comprenant une partie de siège (1) et un dossier (7) avec une structure de dossier, en particulier siège de véhicule automobile, le dossier présentant une structure de coque (12) qui est munie du côté de l'occupant d'un rembourrage (13), la structure de coque (12) présentant au moins un renfoncement (17, 19) pour recevoir un épaississement du rembourrage (13), la structure de coque (12) présentant une partie centrale (23) et des ailes latérales (21) qui sont disposées de manière élastique, à ressort, sur la partie centrale (23), **caractérisé en ce qu'**entre la partie centrale (23) et l'aile latérale (21) est disposée à chaque fois une fente (22) et la partie centrale (23) présente des moyens de rigidification (34), la partie centrale (23) de la structure de coque étant supportée dans sa région inférieure (23'') de manière déplaçable sur la structure de dossier par un agencement de palier inférieur (33).

2. Siège de véhicule automobile selon la revendication 1, **caractérisé en ce que** les fentes présentent une région supérieure dans laquelle se trouvent des moyens (24) pour réduire l'effet d'entaille.

3. Siège de véhicule automobile selon l'une quelconque des revendications 1 ou 2, **caractérisé en ce que** la partie centrale (23) de la structure de coque (12) est connectée dans sa région supérieure (23') à une structure de dossier (8, 8') par des paliers semi-flexibles (26).

4. Siège de véhicule automobile selon l'une quelconque des revendications 1 à 3, **caractérisé en ce que** l'agencement de palier (33) comprend un agencement de levier rotatif (27).

5. Siège de véhicule selon l'une quelconque des revendications 1 à 4, **caractérisé en ce que** l'agencement de palier (33) est précontraint de préférence avec un moyen de ressort (30, 32).

6. Siège de véhicule automobile selon la revendication 5, **caractérisé en ce que** la précontrainte du moyen de ressort peut être ajustée avec un dispositif de serrage (31).
